# EUROPEAN PATENT APPLICATION

(11) **EP 4 661 184 A1**
(43) Date of publication of application: **10.12.2025**
(21) Application number: 25173460.4
(22) Date of filing: 30.04.2025
(51) Int. Cl.: H01M 50/342, H01M 50/30, H01M 50/578

(54) **SECONDARY BATTERY INCLUDING VENTING PORTION**

(30) Priority: 03.06.2024 KR 20240072259; 10.12.2024 KR 20240182217
(71) Applicant: SK On Co., Ltd., Seoul 03161 (KR)
(72) Inventor: KWAK, Seung Ho, 34124 Daejeon (KR); JU, Seung Hoon, 34124 Daejeon (KR)
(74) Representative: Stolmár & Partner Patentanwälte PartG mbB

(57) **Abstract**

A secondary battery according to an embodiment of the present disclosure may include: a housing having an accommodation space; and a venting portion disposed in the housing and openable by pressure of the accommodation space, and the venting portion may include: a venting cover having one surface facing the accommodation space; a notch portion formed in the venting cover; and a protrusion portion protruding toward the notch portion.

## Description

### TECHNICAL FIELD

The present disclosure relates to a secondary battery including a venting portion.

### BACKGROUND

Secondary batteries, unlike primary batteries, are convenient in that they may be charged with or discharged of electricity, therein or therefrom, and are thus receiving much attention as a power source for various mobile devices and electric vehicles. Unlike primary batteries, secondary batteries may be charged and discharged, and may be applied to devices within various fields such as a digital camera, a mobile phone, a laptop computer, a hybrid car, an electric vehicle, and an energy storage system (ESS).

Such secondary batteries may include a battery cell in which an electrode assembly in which a cathode plate, an anode plate and a separator are stacked or wound in a roll shape is accommodated inside a case. A plurality of battery cells may be stacked in a predetermined direction and accommodated in a battery module or a battery pack.

Meanwhile, in a cylindrical type battery cell in which the case is in the shape of a cylinder, the electrode assembly may be accommodated in a case by stacking a cathode electrode plate, an anode plate and a separator, and then winding the same. On a winding side surface of the electrode assembly, the cathode plate and the anode plate may be exposed without any change. In this structure, there is a possibility that the cathode plate and the anode plate may come into contact to cause a short circuit due to errors in a manufacturing process.

### SUMMARY

According to an aspect of the present disclosure, the venting reliability of a secondary battery may be increased.

According to an aspect of the present disclosure, it is possible to prevent venting due to unintended pressure.

A secondary battery of the present disclosure may be widely applied in an electric vehicle, a battery charging station, and green technology fields such as solar power generation and wind power generation using other batteries. Additionally, the secondary battery of the present disclosure may be used in ecofriendly electric vehicles, hybrid vehicles, or the like, to ameliorate the effects of climate change by suppressing air pollution and greenhouse gas emissions.

A secondary battery of an embodiment of the present disclosure includes: a housing having an accommodation space; and a venting portion disposed in the housing and openable by the pressure of the accommodation space, and the venting portion may include: a venting cover having one surface facing the accommodation space; a notch portion formed in the venting cover; and a protrusion portion protruding toward the notch portion.

According to an embodiment, the notch portion may include: a first notch portion intersecting the venting cover; and a second notch portion extending along a peripheral portion of the venting cover from at least one end of the first notch portion.

According to an embodiment, the venting cover may include a first venting cover and a second venting cover facing each other with the first notch portion interposed therebetween.

According to an embodiment, the second notch portion may extend along at least one of a peripheral portion of the first venting cover or a peripheral portion of the second venting cover from the at least one end of the first notch portion.

According to an embodiment, the second notch portion may include: an extension portion extending along the peripheral portion of the venting cover; and a bending portion in which at least a portion thereof is bent toward the first notch portion from the extension portion and is in contact with an end of the first notch portion.

According to an embodiment, the bending portion may extend along the shape of an end of the protrusion portion.

According to an embodiment, the protrusion portion may protrude toward a space between the first venting cover and the second venting cover.

According to an embodiment, the protrusion portion protrudes toward an end of the first notch portion.

According to an embodiment, the protrusion portion may protrude by a predetermined protrusion length.

According to an embodiment, an end of the protrusion portion, an end of the first venting cover, and an end of the second venting cover may be formed to be rounded.

According to an embodiment, the notch portion may include a vulnerable region in which a contact portion of the first notch and the second notch is disposed.

According to an embodiment, at least a portion of the vulnerable region of the notch portion may be disposed between the first venting cover, the second venting cover, and the protrusion portion.

According to an embodiment, the vulnerable region is formed in a delta shape.

According to an embodiment, the contact portion of the notch portion may be disposed between the first venting cover and the second venting cover.

As described above, the solution according to the present disclosure has been described, but this is exemplary, and it should be understood that other components that are not mentioned are also included in the present disclosure.

A secondary battery according to an embodiment of the present disclosure may have increased venting reliability.

A secondary battery according to an embodiment of the present disclosure may prevent venting due to unintended pressure.

### BRIEF DESCRIPTION OF DRAWINGS

Certain aspects, features, and advantages of the present disclosure are illustrated by the following detailed description with reference to the accompanying drawings.
FIG. 1 is a perspective view of a secondary battery according to an embodiment of the present disclosure.
FIG. 2 is a perspective view of a secondary battery according to another embodiment of the present disclosure.
FIG. 3 is a perspective view of a notch portion according to an embodiment.
FIG. 4 is a plan view of a notch portion according to an embodiment.
FIG. 5 is a schematic diagram illustrating a state in which the notch portion is vented.
FIG. 6 is an enlarged view of part A of FIG. 4.
FIG. 7 is an enlarged view of part B of FIG. 6.

### DETAILED DESCRIPTION

Prior to describing the embodiments in detail, it should be understood that the terms used in the specification and the appended claims should not be construed as being limited to general and dictionary meanings, but interpreted based on the meanings and concepts corresponding to technical aspects of the present disclosure on the basis of the principle that the inventor is allowed to define terms appropriately for the best explanation.

The same reference numbers or symbols described in each drawing represent components or elements that perform substantially the same functions. For convenience of description and understanding, the same reference numbers or symbols may be used in different embodiments.

The singular also includes the plural unless specifically stated otherwise in the phrase. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Furthermore, hereinafter, it should be noted in advance that the expressions such as "above," "upper," "below," "beneath," "lower," "side," "front," and "rear" are based on the direction illustrated in the drawings, and may be expressed differently if the direction of the object is changed.

Additionally, in the present specification and claims, terms including ordinal numbers such as "first" and "second" may be used to distinguish between components. These ordinal numbers are used to distinguish the same or similar components from each other, and the meaning of the terms should not be construed as limited by the use of these ordinal numbers. For example, the components combined with these ordinal numbers should not be construed as limiting the order of use or arrangement of the components. If necessary, the ordinal numbers may be used interchangeably.

Hereinafter, the present disclosure will be described in detail with reference to the drawings.

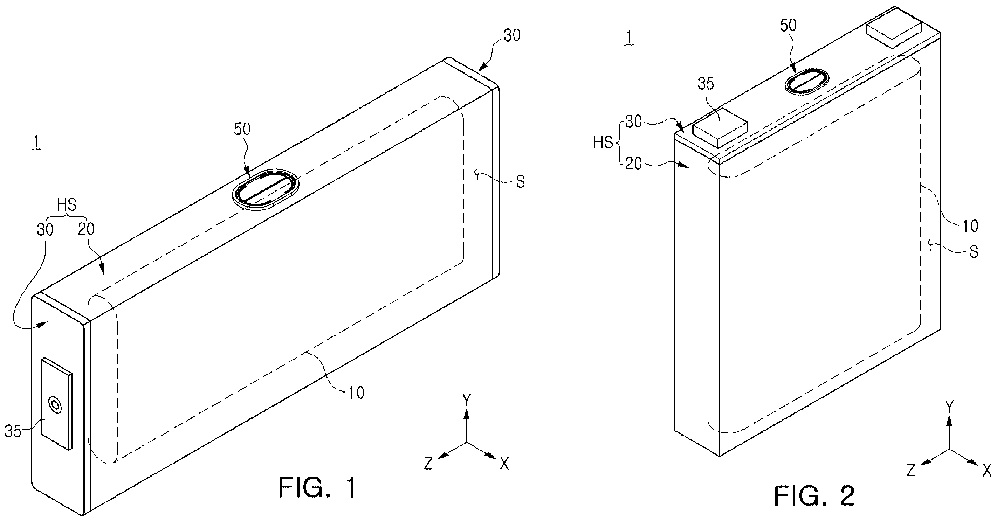

FIG. 1 is a perspective view of a secondary battery according to an embodiment of the present disclosure, and FIG. 2 is a perspective view of a secondary battery according to another embodiment of the present disclosure.

Referring to FIGS. 1 and 2 together, a secondary battery 1 of the present disclosure may include a housing HS having an accommodating space S and a venting portion 50 disposed in the housing HS. Additionally, the secondary battery 1 of the present disclosure may include an electrode assembly 10 accommodated in the accommodating space S. Additionally, although not illustrated in the drawings, the secondary battery 1 may include at least one current collector electrically connecting the electrode assembly 10 and at least one of the cap assembly 30 or the can 20 to each other.

The secondary battery 1 of the present disclosure may include a battery cell. However, the present disclosure is not limited thereto. The secondary battery 1 of the present disclosure may refer to a power source including a battery module including the battery cell, a battery pack, and an energy storage system (ESS). In other words, the term "secondary battery" in the present disclosure may refer to at least one of the power sources described above.

Hereinafter, for the convenience of understanding, a battery cell may be described, but the present disclosure is not limited to a battery cell, and any component including a venting portion 50 to be described below may be included in the present disclosure.

Meanwhile, the secondary battery 1 may be a lithium ion battery, but the present disclosure not limited thereto. For example, the secondary battery 1 may be a nickel-cadmium electric, nickel-metal hydride battery, or nickel-hydrogen battery capable of being charged or discharged therein or therefrom. Additionally, the secondary battery 1 of the present disclosure may be provided in various types depending on the shape of the can 20 accommodating the electrode assembly 10. For example, the secondary battery 1 of the present disclosure may include a battery cell including one of a pouch type, a prismatic type, or a cylindrical type. FIG. 1 and FIG. 2 illustrate a secondary battery 1 including a square battery cell in which a can 20 is formed in a square shape, but this is only one example, and the present disclosure is not limited to the type, shape, material type, and the like of the can 20.

Meanwhile, the electrode assembly 10 accommodated in the can 20 of the present disclosure may be provided in a form in which a cathode plate and an anode plate are stacked with wide surfaces thereof facing each other, and a separator is interposed therebetween. The separator may be disposed between the anode plate and the cathode plate, and may be configured to prevent an electrical short circuit between the anode plate and the cathode plate and to allow for ion flow. For example, the separator may include a porous polymer film or a porous nonwoven fabric. The electrode assembly 10 may be provided in a jelly roll type formed by winding in a predetermined direction, and may be provided in various manners such as a stacking type, a zigzag folding type, a stack-folding type, and the like, depending on a detailed stacking method.

The housing HS of the present disclosure may include a can 20 having an opening (not illustrated) formed on at least one side thereof and at least one cap assembly 30 disposed in the opening.

The can 20 may have an accommodation space S inside, and an opening communicating with the accommodation space S may be disposed on at least one side thereof. In order to secure mechanical rigidity, the can 20 may include a metal such as aluminum or stainless steel. The electrode assembly 10 may be accommodated in the accommodation space S inside the can 20.

The cap assembly 30 may block the opening of the can 20. The cap assembly 30 may include a metal material such as aluminum or stainless steel to secure mechanical rigidity. According to an embodiment, the cap assembly 30 may include the same material as the can 20. However, the present disclosure is not limited to the specific materials of the cap assembly 30 and the can 20.

The cap assembly 30 may be provided in various manners depending on the position or number of the openings. For example, referring to FIG. 1, the openings of the can 20 may be formed on both sides of the can, and the cap assemblies 30 may be disposed in each of the openings (so-called "bidirectional structure"). As another example, referring to FIG. 2, the opening of the can 20 may be formed only on one side, and the cap assembly 30 may be disposed on the one side (so-called "unidirectional structure"). In this manner, the cap assembly 30 is not particularly limited as long as this is disposed on at least one side of the can 20. Meanwhile, the fact that the cap assembly 30 blocks the opening of the can 20 may denote including at least one of covering, closing, disposing, or sealing the opening of the can 20. However, the cap assembly 30 of the present disclosure is not limited to this function, and is not particularly limited as long as this has a structure that is disposed in the opening and coupled to the can 20.

The cap assembly 30 may include an electrode terminal 35 electrically connected to the electrode assembly 10. At least a portion of the electrode terminal 35 may be exposed to the outside and may be electrically connected to an external power source. That is, the electrode terminal 35 may be electrically connected to an external power source (e.g., another secondary battery and the like) of the secondary battery 1.
Referring to FIG. 1 (e.g., the bidirectional structure), each of the electrode terminals 35 may be disposed in the cap assembly 30 disposed on one side of the can 20 and in the cap assembly 30 disposed on the other side of the can 20, and may have different polarities. That is, according to an embodiment, an electrode assembly 10 may be accommodated in the accommodation space S of the can 20, and an opening of the can 20 may be formed on both sides of the can with the electrode assembly 10 interposed therebetween, and at least one cap assembly 30 may be disposed on each of one side and the other side of the can 20 having an opening formed therein, so that the the secondary battery has a bidirectional structure.

Referring to FIG. 2 (e.g., the unidirectional structure), two electrode terminals 35 may be disposed in one cap assembly 30 and may have different polarities. However, this is only one example, and the present disclosure is not limited to the structure of the electrode terminals 35. That is, according to an embodiment, the opening of the can 20 may be formed on one side, and the cap assembly 30 may be disposed on the one side of the can 20, so that the secondary battery has a unidirectional structure.

According to an embodiment of the present disclosure, the secondary battery 1 may include a venting portion 50. The venting portion 50 may be disposed in the housing HS and may include a notch portion 55 that may be fractured by gas in the accommodating space S. The venting portion 50 may be disposed in at least one of the cap assembly 30 or the can 20. That is, the venting portion 50 of the present disclosure is not particularly limited to a position thereof as long as this is disposed to apply the pressure of the accommodating space S thereto.

Hereinafter, the venting portion 50 of the present disclosure will be specifically described with reference to the drawings.

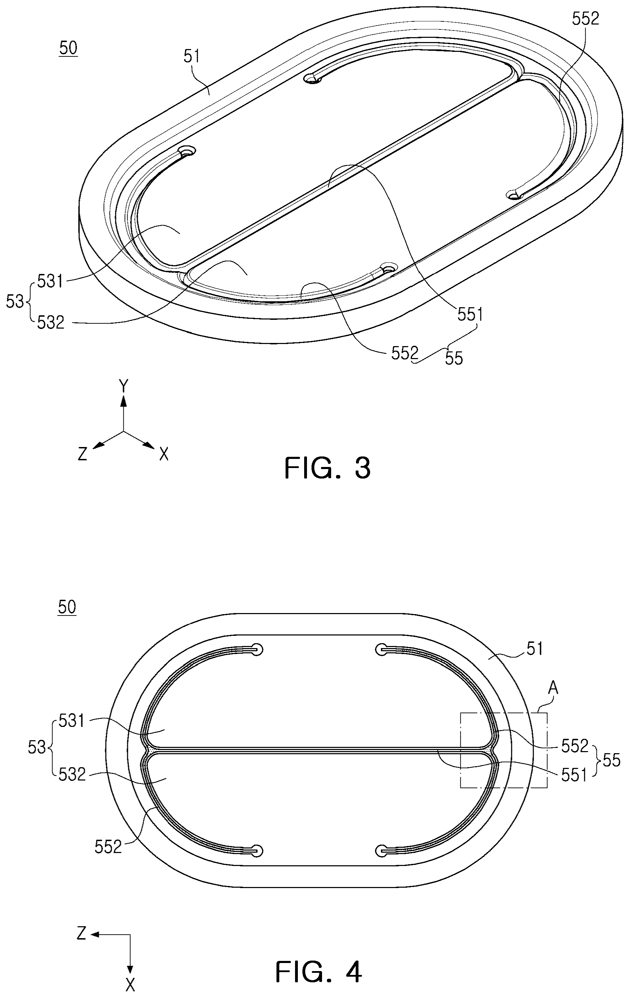

FIG. 3 is a perspective view of a notch portion according to an embodiment, and FIG. 4 is a plan view of a notch portion according to an embodiment.

A venting portion 50 according to an embodiment of the present disclosure may include a base 51, a venting cover 53, and a notch portion 55.

The base 51 may be disposed to cover at least a portion of the venting cover 53. The base 51 may provide support to the venting cover 53 so that the venting cover 53 may be disposed in a predetermined position of the housing HS.

At least a portion of the venting cover 53 may face the accommodating space S. For example, the venting cover 53 may be provided in a shape of a plate facing the accommodating space S. The venting cover 53 may have a notch portion 55 formed therein to be fractured by the pressure of the accommodating space S. That is, a thickness of the venting cover 53 may be recessed more thinly than other surrounding portions to form the notch portion 55. As will be described below, the venting cover 53 may include a protrusion portion 535. The protrusion portion 535 may protrude inwardly between a first venting cover 531 and a second venting cover 532. Alternatively, the protrusion portion 535 may protrude inwardly in an extension direction of a first notch portion 551. Here, the term "inward" may refer a central portion of the venting cover 53, not a peripheral portion of the venting cover 53.

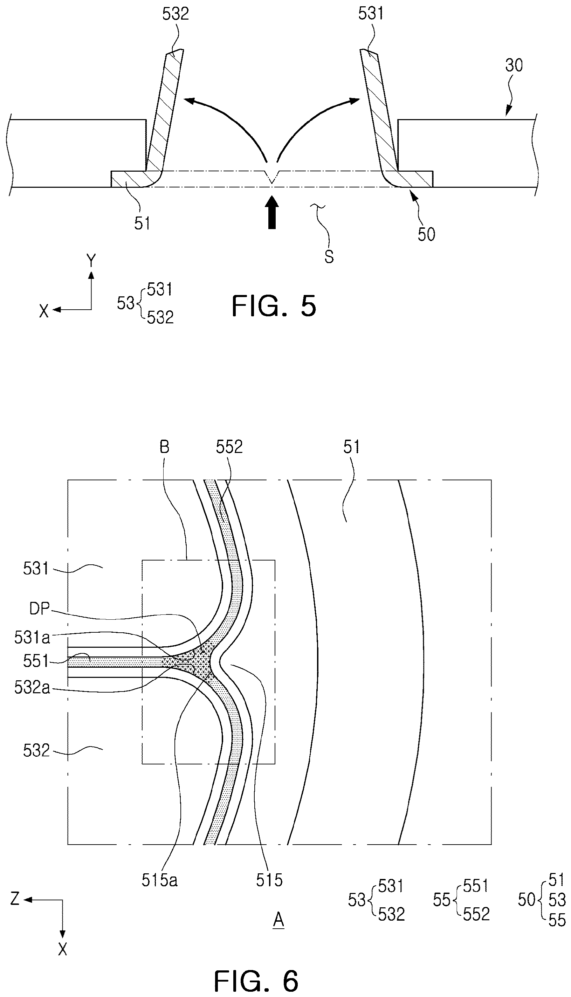

According to an embodiment, the venting cover 53 may be fractured by pressure and may be opened to both sides. Specifically, referring to FIG. 5 in advance, the venting cover 53 may include a first venting cover 531 open to one side and a second venting cover 532 open to the other side. That is, a notch portion 55 may be disposed between the first venting cover 531 and the second venting cover 532 so that the first venting cover 531 and the second venting cover 532 may be opened while being independently fractured.

The notch portion 55 may be formed by recessing at least a portion thereof in the venting cover 53. Specifically, the notch portion 55 may be formed by recessing at least a portion of the other surface, among one surface (a surface facing the accommodating space S) and the other surface (a surface facing the outside) of the venting cover 53 (see FIG. 5). However, the present disclosure is not limited to a recessing direction of the notch portion 55.

The notch portion 55 may include a first notch portion 551 and a second notch portion 552. The notch portion 55 may include a first notch portion 551 intersecting the venting cover 53 and a second notch portion 552 extending along a peripheral portion of the venting cover 53 from at least one end of the first notch portion 551. The first and second venting covers 531 and 532 may be opened to both sides through the first notch portion 551 and the second notch portion 552. That is, the first venting cover 531 and the second venting cover 532 of the venting cover 53 may face each other with the first notch portion 551 interposed therebetween.

Specifically, according to an embodiment, the first notch portion 551 may extend in the first direction (Z-axis), and the second notch portion 552 may extend along the peripheral of the venting cover 53 from both ends of the first notch portion 551. Specifically, the second notch portion 552 may extend along at least one of a peripheral portion of the first venting cover 531 or a peripheral portion of the second venting cover 532 from at least one end of the first notch portion 551.

Here, the 'peripheral portion of the venting cover 53' may refer to an edge portion of the venting cover 53 adjacent to the base 51 in the extension direction (Z-axis) of the first notch portion 551. Additionally, in the drawing, the second notch portion 552 extends roundly according to an edge shape of the base 51 and the venting cover 53, but the present disclosure is not limited thereto. For example, in an embodiment not illustrated, when the base 51 and the venting cover 53 have a square shape, the second notch portion 552 may extend in a straight line.

In this manner, according to an embodiment of the present disclosure, the secondary battery may include the housing HS having the accommodating space S in which the electrode assembly 10 is accommodated, and the venting portion 50 disposed in the housing HS and openable by the pressure of the accommodating space S may be included, and the venting portion 50 may include the venting cover 53 having one surface facing the accommodating space S, a notch portion 55 formed in the venting cover 53, and a protrusion portion 535 protruding toward the notch portion 55.

Hereinafter, a structure in which the notch portion 55 is vented will be described in detail with reference to the drawings.

FIG. 5 is a schematic diagram illustrating a state in which a notch portion is vented.

Referring to FIG. 5, a vent portion 50 of the present disclosure may be vented while a venting cover 53 is opened on both sides by a notch portion 55. Specifically, the venting cover 53 is subjected to pressure by the pressure of the accommodating space S, and in this case, the venting cover 53 may be fractured and opened while the pressure is concentrated on a portion in which the notch portion 55 is formed.

Meanwhile, when performing a venting operation by the pressure of the accommodating space S, the pressure may be concentrated at a contact portion (CP) in which the first notch portion 551 and the second notch portion 552 come into contact with each other. Specifically, a vulnerable region (DP) in which the contact portion (CP) is disposed may be formed between the first notch portion 551 and the second notch portion 552. As an area of the vulnerable region (DP) increases, there may be a concern that the venting portion 50 may be vented before the pressure reaches a previously designed venting pressure range due to the pressure in the accommodating space S. Accordingly, in the present disclosure, the reliability of venting may be increased by reducing an area of the vulnerable region (DP) while at least a portion of the second notch portion 552 bends toward the first notch portion 551. Additionally, through this structure, the contact portion (CP) may be disposed between the first and second venting covers 531 and 532, thereby further increasing the reliability of venting.

The following is a detailed description with reference to the drawings.

FIG. 6 is an enlarged view of part A of FIG. 4. Referring to FIG. 6, the notch portion 55 may further include a vulnerable region (DP). The vulnerable region (DP) may be formed between the first notch portion 551 and the second notch portion 552. The vulnerable region (DP) may refer to a portion in which the first notch portion 551 and the second notch portion 552 are close to or connected to each other. Additionally, the vulnerable region (DP) may refer to a region in which the contact portion (CP) of the first notch portion 551 and the second notch portion 552 is disposed.

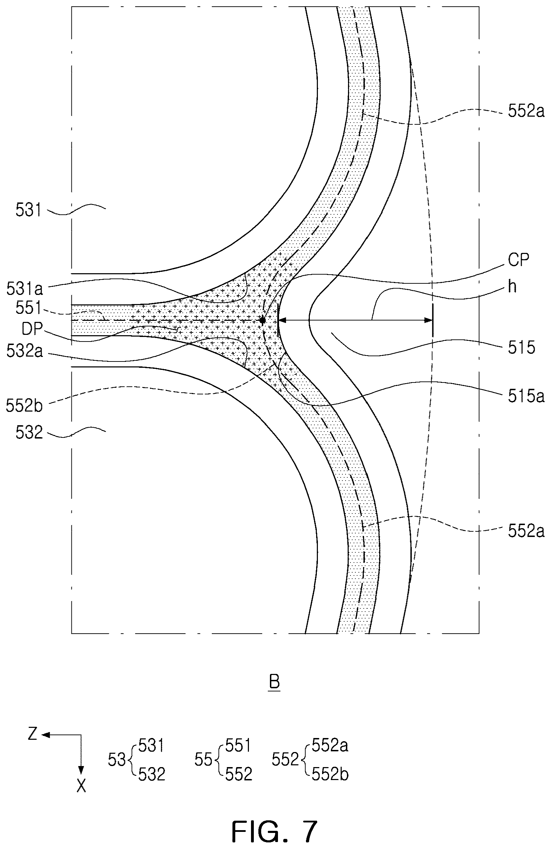

Meanwhile, when the second notch portion 552 extends only in a ")" shape along an edge of the venting cover 53, unlike the drawing, wince the area of the vulnerable region (DP) is formed to be relatively wide, the notch portion 55 may be fractured by unexpected pressure. That is, when the vulnerable region (DP) becomes relatively wide, the notch portion 55 may be fractured at a pressure lower than the previously designed pressure by instantaneous pressure applied to the vulnerable region (DP) during venting, so that the venting cover 53 may be opened. Accordingly, according to an embodiment of the present disclosure, the venting portion 50 may include a protrusion portion 535 protruding between the first and second venting covers 531 and 532. The protrusion portion 535 may be provided to protrude toward the vulnerable region (DP) and cover at least a portion of the vulnerable region (DP), thereby relatively reducing an area of the vulnerable region (DP). Specifically, according to an embodiment, the protrusion portion 535 may protrude toward a space between the first venting cover 531 and the second venting cover 532. According to another embodiment, the protrusion portion 535 may protrude toward an end of the first notch portion 551. Here, the 'end of the first notch portion 551' toward which the protrusion portion 535 is directed may denote including the contact portion (CP, see FIG. 7) of the first notch portion 551 and the second notch portion 552.

In other words, when the vulnerable region (DP) is formed between ends 531a and 532a of the first and second venting covers 531 and 532 and the base 51, an area of the vulnerable region (DP) may become relatively wide, thereby reducing the reliability of the venting. According to the present disclosure, the vulnerable region (DP) may be formed between the ends 531a and 532a of the venting covers 531 and 532 and an end 535a of the protrusion portion 535. Through this, the present disclosure may relatively reduce the area of the vulnerable region (DP) and may increase the reliability of the venting. The second notch portion 552 may include a bending portion (552b, see FIG. 7) in which at least thereof is bent toward the first notch portion 551 by the protrusion portion 535.

In the drawing, the vulnerable region (DP) is indicated by the shading of the delta shape formed between the first and second notch portions 551 and 552.

Meanwhile, according to an embodiment, the end 535a of the protrusion portion 535 may be rounded to relieve pressure applied to the vulnerable region (DP). According to an embodiment, the ends 531a and 532b of the first venting cover 531 and the second venting cover 532 may also be formed to be round. Through this, the vulnerable region (DP) may be formed to be in a delta shape.

That is, according to an embodiment, the end 535a of the protrusion portion 535, the end 531a of the first venting cover, and the end 532a of the second venting cover may be formed to be round.

Hereinafter, the structure of the notch portion 55 forming the vulnerable region (DP) will be described in more detail with reference to FIG. 7.

FIG. 7 is an enlarged view of part B of FIG. 6

Referring to FIG. 7, a contact portion (CP) of the first notch portion 551 and the second notch portion 552 may be disposed inside the vulnerable region (DP). Here, the contact portion (CP) may refer to a portion in which an extension line (see a dotted line in the drawing) of the first notch portion 551 and an extension line (see a dotted line in the drawing) of the second notch portion 552 are in contact with each other. As will be described below, the contact portion (CP) may be disposed relatively inwardly (+Z axis) by the protrusion portion 535. Specifically, the first notch portion 551 may be disposed to extend in the first direction (Z axis) so as to cross between the first venting cover 531 and the second venting cover 532.

The second notch portion 552 may include an extension portion 552a extending in the peripheral portion of the venting cover 53 and a bending portion 552b in which at least a portion thereof is bent toward the first notch portion 551 from the extension portion 552a. The bending portion 552b may be in contact with an end of the first notch portion 551. Here, the meaning of "bending" includes both curvature and folding, and may denote that at least a portion of a path is bent in a direction that is not parallel to the extension direction of the extension portion 552a. That is, in the drawing, the bending portion 552b may be in contact with the first notch portion 551 while being bent from at least a portion of the extension portion 552a.

According to an embodiment, the bending portion 552b of the second notch portion 552 may be formed by the protrusion portion 535. As illustrated in the drawing, the bending portion 552b may extend along the shape of the end 535a of the protrusion portion 535. The protrusion portion 535 may protrude toward the end of the first notch portion 551 by a predetermined protrusion length (h). At least a portion of the second notch portion 552 may be bent toward the first notch portion 551 by the protrusion portion 535, thereby forming the bending portion 552b. Through this, the bending portion 552b of the second notch portion 552 may be bent inwardly toward the first notch portion 551 by the protrusion length (h) of the protrusion portion 535 from a virtual line (see a dotted line) of the extension portion 552a.

In this manner, a secondary battery 1 according to an embodiment of the present disclosure includes a can 20 having an opening formed on at least one side thereof, at least one cap assembly 30 coupled to the can 20 to close the opening, and a venting portion 50 disposed on at least one of the can 20 or the at least one cap assembly 30 and including a venting cover 53 and a notch portion 55 formed in the venting cover 53, and the notch portion 55 may include a first notch portion 551 intersecting the venting cover 53, and a second notch portion 552 including an extension portion 552a extending along the peripheral portion of the venting cover 53, and a bending portion 552b in which at least a portion thereof is bent toward the first notch portion 551 from the extension portion 552a and in contact with an end of the first notch portion 551.

Meanwhile, the 'dotted line' indicated on the first notch portion 551 and the second notch portion 552 in the drawing may be a virtual line indicating the extension direction of the first notch portion 551 and the second notch portion 552. In other words, the contact portion (CP) may denote a point at which the virtual extension line of the first notch portion 551 and the virtual extension line of the second notch portion 552 meet each other.

Additionally, according to an embodiment, the contact portion (CP) of the notch portion 55 may be disposed between the first venting cover 531 and the second venting cover 532. Specifically, based on the second direction (X-axis) perpendicular to the first direction (Z-axis) in which the first notch portion 551 extends, the contact portion (CP) of the notch portion 55 may be disposed between the first venting cover 531 and the second venting cover 532.

Meanwhile, as described above, according to an embodiment of the present disclosure, the contact portion (CP) of the notch portion 55 may be disposed between the first venting cover 531 and the second venting cover 532. Through this structure, the present disclosure may increase the venting reliability. More specifically, the secondary battery 1 according to an embodiment of the present disclosure may include the housing HS having the accommodating space S in which the electrode assembly 10 is accommodated, and the venting portion 50 disposed in the housing HS, and the venting portion 50 may include the venting cover 53 including the first venting cover 531 and the second venting cover 532, and the notch portion 55 including the first notch portion 551 intersecting a space between the first venting cover 531 and the second venting cover 532 and the second notch portion 552 extending from at least one end of the first notch portion 551, and the contact portion (CP) of the first notch portion 551 and the second notch portion 552 may be disposed between the first venting cover 531 and the second venting cover 532.

The above-described content is merely an example of applying the principle of the present disclosure.

(Aspect 1) A secondary battery, comprising: a housing having an accommodation space; and a venting portion disposed in the housing and openable by pressure of the accommodation space, wherein the venting portion includes: a venting cover having one surface facing the accommodation space; a notch portion formed in the venting cover; and a protrusion portion protruding toward the notch portion.

(Aspect 2) The secondary battery of aspect 1, wherein the notch portion includes: a first notch portion intersecting the venting cover; and a second notch portion extending along a peripheral portion of the venting cover from at least one end the first notch portion.

(Aspect 3) The secondary battery of aspect 2, wherein the venting cover includes a first venting cover and a second venting cover facing each other with the first notch portion interposed therebetween.

(Aspect 4) The secondary battery of aspect 3, wherein the second notch portion extends along at least one of a peripheral portion of the first venting cover or a peripheral portion of the second venting cover from the at least one end of the first notch portion.

(Aspect 5) The secondary battery of one of aspects 2 to 4, wherein the second notch portion includes: an extension portion extending along the peripheral portion of the venting cover; and a bending portion in which at least a portion thereof is bent toward the first notch portion from the extension portion and is in contact with an end of the first notch portion.

(Aspect 6) The secondary battery of aspect 5, wherein the bending portion extends along the shape of an end of the protrusion portion.

(Aspect 7) The secondary battery of aspect 3 or 4, wherein the protrusion portion protrudes toward a space between the first venting cover and the second venting cover.

(Aspect 8) The secondary battery of any one of aspects 2 to 7, wherein the protrusion portion protrudes toward an end of the first notch portion.

(Aspect 9) The secondary battery of any one of aspects 1 to 8, wherein the protrusion portion protrudes by a predetermined protrusion length.

(Aspect 10) The secondary battery of any one of aspect 3, 4, and 7, wherein an end of the protrusion portion, an end of the first venting cover, and an end of the second venting cover are formed to be rounded.

(Aspect 11) The secondary battery of aspect 3, wherein the notch portion includes a vulnerable region in which a contact portion of the first notch and the second notch is disposed.

(Aspect 12) The secondary battery of aspect 11, wherein at least a portion of the vulnerable region of the notch portion is disposed between the first venting cover, the second venting cover, and the protrusion portion.

(Aspect 13) The secondary battery of aspect 11 or 12, wherein the vulnerable region is formed in a delta shape.

(Aspect 14) The secondary battery of any one of aspects 11 to 13, wherein the contact portion of the notch portion is disposed between the first venting cover and the second venting cover.

## Claims

1. A secondary battery, comprising:
a housing having an accommodation space; and
a venting portion disposed in the housing and openable by pressure of the accommodation space,
wherein the venting portion includes:
a venting cover having one surface facing the accommodation space;
a notch portion formed in the venting cover; and
a protrusion portion protruding toward the notch portion.

2. The secondary battery of claim 1, wherein the notch portion includes:
a first notch portion intersecting the venting cover; and
a second notch portion extending along a peripheral portion of the venting cover from at least one end the first notch portion.

3. The secondary battery of claim 2, wherein the venting cover includes a first venting cover and a second venting cover facing each other with the first notch portion interposed therebetween.

4. The secondary battery of claim 3, wherein the second notch portion extends along at least one of a peripheral portion of the first venting cover or a peripheral portion of the second venting cover from the at least one end of the first notch portion.

5. The secondary battery of any one of claims 2 to 4, wherein the second notch portion includes:
an extension portion extending along the peripheral portion of the venting cover; and
a bending portion in which at least a portion thereof is bent toward the first notch portion from the extension portion and is in contact with an end of the first notch portion.

6. The secondary battery of claim 5, wherein the bending portion extends along the shape of an end of the protrusion portion.

7. The secondary battery of claim 3 or 4, wherein the protrusion portion protrudes toward a space between the first venting cover and the second venting cover.

8. The secondary battery of any one of claims 2 to 7, wherein the protrusion portion protrudes toward an end of the first notch portion.

9. The secondary battery of any one of claims 1 to 8, wherein the protrusion portion protrudes by a predetermined protrusion length.

10. The secondary battery of any one of claim 3, 4, and 7, wherein an end of the protrusion portion, an end of the first venting cover, and an end of the second venting cover are formed to be rounded.

11. The secondary battery of claim 3, wherein the notch portion includes a vulnerable region in which a contact portion of the first notch and the second notch is disposed.

12. The secondary battery of claim 11, wherein at least a portion of the vulnerable region of the notch portion is disposed between the first venting cover, the second venting cover, and the protrusion portion.

13. The secondary battery of claim 11 or 12, wherein the vulnerable region is formed in a delta shape.

14. The secondary battery of any one of claims 11 to 13, wherein the contact portion of the notch portion is disposed between the first venting cover and the second venting cover.
